# EUROPÄISCHE PATENTSCHRIFT

(11) **EP 0 647 581 B1**
(45) Veröffentlichungstag und Bekanntmachung des Hinweises auf die Patenterteilung: **29.07.1998**
(21) Anmeldenummer: 94114962.7
(22) Anmeldetag: 22.09.1994
(51) Int. Cl.: B65G 53/48

(54) **Schneckenförderer für Schüttgut**
Screw conveyor for bulk materials
Transporteur à vis pour matières en vrac

(30) Priorität: 06.10.1993 DE 9315175 U
(43) Veröffentlichungstag der Anmeldung: 12.04.1995
(73) Patentinhaber: BMH Claudius Peters AG, 21614 Buxtehude (DE)
(72) Erfinder: Weist, Hans-Joachim, D-25587 Münsterdorf (DE)
(74) Vertreter: Glawe, Delfs, Moll & Partner

(56) Entgegenhaltungen:
- EP-A- 0 237 456
- DE-C- 886 268
- FR-A- 755 192

## Beschreibung

Bei Schneckenförderern für Schüttgut, die in einen Auslaßraum höheren Drucks fördern sollen, ist es bekannt (EP-B 98 340, FR-A 755 192, DE-C 886 268), am Auslaßende des Schneckenförderers eine Rückschlagklappe vorzusehen, die durch Gewicht, Federkraft oder pneumatisch in die Schließstellung gedrängt ist. Ohne Rückschlagklappe würde die Druckdifferenz zwischen dem Auslaß und dem Einlaß des Schneckenförderers zu einer Gasströmung im Schneckenförderer entgegen seiner Förderrichtung führen, die die Aufnahme von Schüttgut am Einlaßende unmöglich machen würde. Sobald der Schneckenförderer mit Schüttgut gefüllt ist, das die Eignung zur Pfropfenbildung aufweist, kann die gegensinnige Gasströmung hinreichend unterdrückt werden, solange am Einlaß der Förderschnecke hinreichende Versorgung mit neuem Schüttgut gewährleistet ist. Da diese Bedingung jedoch nicht immer eingehalten werden kann und es auch Schüttgüter gibt, die aufgrund ihrer Grobkörnigkeit oder Ihres Kornspektrums oder ihrer Konsistenz wenig Neigung zur Pfropfenbildung zeigen, ist die Klappenfunktion in der Regel auch während des Betriebs erforderlich. Das aus dem Förderer austretende Gut hebt die Klappe von ihrem Sitz ab, wobei aber die Klappe aufgrund ihrer nachgiebigen Belastung durch Feder oder Gewicht weiterhin eine komprimierende und zusammenhaltende Wirkung auf das im Auslaßende des Förderers befindliche Gut ausübt und dadurch zur Bildung eines Pfropfens beiträgt. Diese Wirkung ist um so größer, je stärker die Kraft ist, durch die die Klappe in die Schließstellung gedrückt wird. Bei sogenanntem schwierigen Gut, das wenig Neigung zur Pfropfenbildung aufweist und bei dem die Gefahr vorhanden ist, daß Gas entgegen der Förderrichtung den Schneckenförderer durchströmt und dadurch nicht nur die Förderwirkung beeinträchtigt, sondern möglicherweise auch die Gutaufnahme hemmt, wird daher die Klappenschließkraft hoch eingestellt. Dies hat aber den Nachteil, daß das Gut einen hohen Austrittswiderstand vorfindet, eine höhere Antriebsleistung für die Förderschnecke erforderlich ist, der Verschleiß ansteigt und die Temperatur des Förderguts möglicherweise unzulässig angehoben wird.

Bei den bekannten Maschinen zeigt sich im Betrieb eine lebhafte Bewegung der Rückschlagklappe. Man nahm an, daß dies eine notwendige Begleiterscheinung der ordnungsgemäßen Klappenfunktion sei, weil es erforderlich schien, daß die Klappe sich den wechselnden Bedingungen des Material austritts am Schneckenauslaß verzögerungsfrei anpassen kann, damit einerseits der Austritt des Materials aus dem Schneckenförderer nicht unnötig gehemmt wird und andererseits jederzeit eine hinreichende Rückhaltewirkung auf das austretende Material ausgeübt werden kann.

Der Erfindung liegt die Aufgabe zugrunde, insbesondere bei schwierigem Gut die Betriebseigenschaften zu verbessern. Die erfindungsgemäße Lösung besteht in den Merkmalen des Anspruchs 1. Demzufolge wird ein Dämpfer zum Dämpfen der Bewegung der Rückschlagklappen vorgesehen, der nur oder stärker entgegen der Öffnungsbewegungsrichtung der Klappe wirkt als entgegen der Schließbewegungsrichtung. Dies ist überraschend, weil durch eine Dämpfung bewirkt wird, daß die Klappe der Materialbewegung nur verzögert folgen kann. Jedoch hat sich gezeigt, daß die Schließkraft der Klappe selbst bei schwierigem Gut drastisch gesenkt werden kann. Dies hat die Folge, daß auch die Antriebsleistung, der Verschleiß und die Temperaturerhöhung des Guts wesentlich geringer ausfallen. Ein gegebener Schneckenförderer kann mit niedrigerer Mindest-Drehzahl und entsprechend geringerer Mindest-Förderleistung betrieben werden als bisher, ohne daß das entgegen der Förderrichtung durchblasende Gas die Gutaufnahme am Eintrittsende behindert. Er kann auch mit höherer Maximal-Drehzahl und Maximal-Förderleistung betrieben werden. Der Kapazitätsbereich wird dadurch erheblich ausgeweitet. Die Förderung ist auch gleichmäßiger als bislang, was wiederum für eine sich anschließende pneumatische Förderung und in solchen Fällen vorteilhaft ist, in denen eine Dosierung stattfinden soll.

Auf welchen Zusammenhängen die Wirkung der Erfindung beruht, konnte noch nicht hinreichend geklärt werden. Jedoch könnten die folgenden Zusammenhänge maßgebend sein. Vergleicht man bei herkömmlichen Schneckenförderern einerseits die Rückstellkraft, die durch Feder oder Gewicht ausgeübt wird und andererseits die vom Differenzdruck auf die Klappe im Schließsinne ausgeübte Kraft, so stellt man fest, daß die letztere vielfach größer ist als die erstere. Die vom Differenzdruck ausgeübte Kraft ist jedoch nur dann voll wirksam, wenn die Klappe auf ihrem gesamten Umfang auf dem Sitz oder dem Materialpfropfen aufliegt. Sobald an einer Stelle kein hinreichender Kontakt vorhanden ist oder grobkörniges Gut Zwischenraum läßt, wirkt der Gasdruck des Auslaßraums auch auf die der Schnecke zugewandten Seite der Klappe und vermindert dadurch die von dem Gasdruck auf die Klappe wirkende Schließkraft oder hebt sie ganz auf, so daß nur noch die Rückstellkraft der Feder oder des Gewichts wirkt. Je nach dem momentanen Zustand des austretenden Guts wechselt daher die von der Klappe auf das Gut ausgeübte Kraft und die dadurch hervorgerufene Kompression stark, was zu entsprechender Wechselwirkung führt. Die erfindungsgemäße Dämpfung verringert diese Wechselwirkung und führt daher zu einem besseren Ergebnis.

Zwar ist es bekannt (EP-A 237 456) bei einem Rückschlagventil für Flüssigkeiten das periodische Schlagen des Ventiltellers im Falle geringer Überdrücke durch einen Dämpfer zu vermeiden; jedoch konnte dies keine Anregung zu der vorliegenden Erfindung geben. In einem Rückschlagventil sperrt der Ventilteller das unter höherem Druck stehende Medium beim Eintritt in einen Raum niedrigeren Drucks ab und kommt in periodische, schlagende Bewegung, wenn bei niedrigem Überdruck Druckschwankungen auftreten. Hingegen wird bei der erfindungsgemäßen Schneckenpumpe Feststoff in einen Raum höheren Drucks gefördert, wobei die Absperrung nicht durch die Klappe bewirkt wird sondern durch einen von der Schnecke komprimierten Materialpfropfen. Die Klappe hat die Aufgabe, die Komprimierung des Materialpfropfens zu ermöglichen. Während ihrer Schließkraft bei einem Rückschlagventil entsprechend der zu erreichenden Druckdifferenz eingestellt wird, wird sie bei einer Schneckenpumpe entsprechend den Materialeigenschaften eingestellt. Man nahm an, daß die Bewegung der Klappe im Anschluß an Schneckenförderer mit der wechselnden Struktur des sich zwischen dem Ende des Schneckenförderers und der Klappe hindurch quetschenden Guts zusammenhängt.

Beispielsweise konnte bei einem gegebenen Schneckenförderer die durch Federkraft auf die Klappe ausgeübte Rückstellkraft bei der Förderung von Flugasche, die als schwieriges Gut gilt, auf etwa ein Zehntel gesenkt werden und konnte die Förderleistung bei gleicher Antriebsleistung um ein Drittel erhöht werden.

Die Erfindung ist von besonderem Wert bei sogenannten Schneckenpumpen, die Schüttgut einem pneumatischen Förderer zuführen, wobei in dem Auslaßraum des Schneckenförderers ein Überdruck von 0,5 bis 2 bar herrscht.

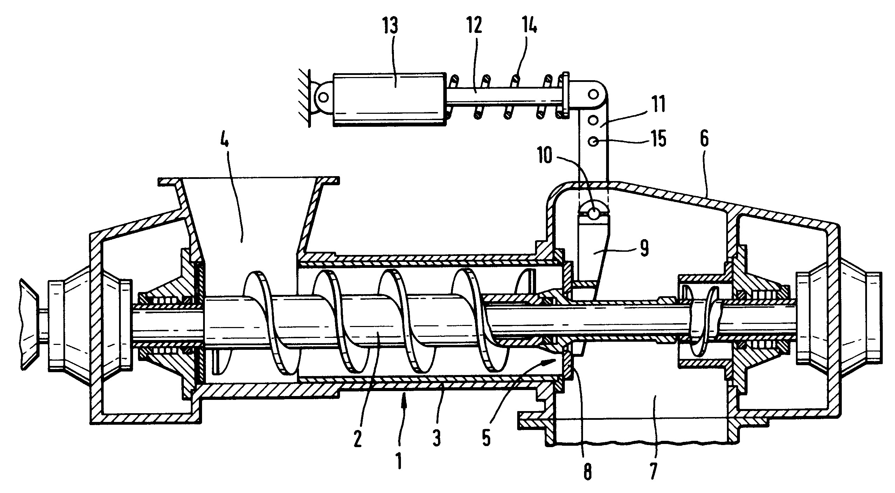

Die Erfindung wird im folgenden näher unter Bezugnahme auf die Zeichnung erläutert, die ein vorteilhaftes Ausführungsbeispiel in einem Teil-Längsschnitt veranschaulicht.

Der Schneckenförderer 1 besitzt ein die Schnecke 2 umschließendes Gehäuse 3 mit Einlaßtrichter 4 und Auslaßöffnung 5. Da die Schnecke im dargestellten Beispiel an beiden Enden gelagert ist, ist die Auslaßöffnung 5 ringförmig. Jedoch kann die Schnecke auch fliegend gelagert sein und die Auslaßöffnung entsprechend vollkreisförmig ist. Der von einem Gehäuse 6 eingeschlossene Auslaßraum 7 führt zu einer pneumatischen Förderleitung und ist mit dem überatmosphärischen Druck des Fördergases in der Größenordnung von 0,5 bis 2 bar beaufschlagt, während der Einlaß 4 des Schneckenförderers etwa bei Atmosphärendruck liegt.

Die Auslaßöffnung 5 ist mit einer Rückschlagklappe 8 versehen, die an einem Arm 9 um eine Achse 10 schwenkbar ist. Die Achse 10 ist mit einem weiteren Hebelarm 11 verbunden, an dessen freiem Ende die Kolbenstange 12 eines Dämpfungszylinders 13 angreift. Außerdem wirkt auf dieses Hebelende eine Druckfeder 14, die die Rückstellkraft für die Klappe 8 bestimmt. Die Größe der Rückstellkraft ist verstellbar, beispielsweise dadurch, daß das Ende der Kolbenstange 12 mit verschiedenen Bohrungen 15 im Hebelarm 11 verbindbar ist. Die Dämpfung des Dämpfungszylinders 13 wirkt nur in einer Richtung, nämlich entgegend er Öffnungsbewegung der Klappe. Sie sollte gleichfalls verstellbar sein, vorzugsweise stufenlos.

## Patentansprüche

1. Schneckenförderer für Schüttgut, dessen Auslaß (5) von einem Auslaßraum (7), in dem ein höherer Gasdruck als am Einlaß (4) des Schneckenförderers (1) herrscht, durch eine Rückschlagklappe (8) getrennt ist, die durch eine nachgiebige Kraft (14) in ihre Schließstellung gedrängt ist, dadurch gekennzeichnet, daß ein Dämpfer (13) zum Dämpfen der Bewegung der Rückschlagklappe (8) vorgesehen ist, der nur oder stärker entgegen der Öffnungsbewegungsrichtung der Klappe wirkt als entgegen der Schließbewegungsrichtung.

## Claims

1. Worm conveyor for bulk material having an outlet (5) from an outlet area (7) with a higher gas pressure than at the inlet (4) of the worm conveyor (1), which is separated by a check flap (8) which is pushed into its closing position via a flexible force (14), characterized by a damper (13) for damping of the movement of the check flap (8) which only reacts or which reacts increasingly against the opening movement of the flap than against the closing movement.

## Revendications

1. Convoyeur à vis pour des matières en vrac qui a une sortie (5) d'une chambre d'échappement (7) avec une pression de gaz plus élevée qu'à l'entrée (4) du convoyeur à vis (1) séparée à l'aide d'un clapet de retenue (8) qui est forcé dans sa position de fermeture par une force souple (14), caractérisé par le fait qu'un amortisseur (13) pour amortir le mouvement du clapet de retenue (8) est prévu qui agit seulement ou plus fortement contre la direction du mouvement d'ouverture du clapet que contre la direction du mouvement de fermeture.
